# EUROPEAN PATENT APPLICATION

(11) **EP 4 852 565 A1**
(43) Date of publication of application: **09.12.2026**
(21) Application number: 24940187.8
(22) Date of filing: 10.05.2024
(51) Int. Cl.: H04W 72/0453

(54) **RESOURCE DETERMINATION METHOD AND APPARATUS, AND FIRST DEVICE AND SECOND DEVICE**

(71) Applicant: GUANGDONG OPPO MOBILE TELECOMMUNICATIONS CORP., LTD., Dongguan, Guangdong 523860 (CN)
(72) Inventor: ZHAO, Zhenshan, Dongguan, Guangdong 523860 (CN); ZHANG, Shichang, Dongguan, Guangdong 523860 (CN); DING, Yi, Dongguan, Guangdong 523860 (CN)
(74) Representative: Penza, Giancarlo
(86) International application number: PCT/CN2024/092279
(87) International publication number: WO 2025/231819

(57) **Abstract**

The embodiments of the present application provide a resource determination method and apparatus, and a first device and a second device. The method comprises: a first device determining a first frequency domain resource, wherein the first frequency domain resource is used for sending first identification information of the first device to a second device.

## Description

### TECHNICAL FIELD

The embodiments of the present disclosure relate to the field of mobile communication technology, and more specifically, to methods and apparatuses for resource determination, the first device, and the second device.

### BACKGROUND

In some scenarios, it is necessary to read a large number of wireless tags of the first device in a short time, and the first device may report information by Time Division Multiple Address (TDMA) manner or Frequency Division Multiple Address (FDMA) manner. Compared with the TDMA manner, the FDMA manner can support multiple first devices to report information at the same time, which has higher transmission efficiency and lower delay.

However, when the first devices perform the information reporting process and the system supports FDMA, how the first devices determine the corresponding frequency domain resources is a problem that needs to be solved.

### SUMMARY

The embodiments of the present disclosure provide methods and apparatuses for resource determination, the first device, and the second device.

In the first aspect, the method for resource determination provided by the embodiments of the present disclosure includes the following operation.

The first device determines the first frequency domain resource. The first frequency domain resource is used to transmit the first identification information of the first device to the second device.

In the second aspect, the method for resource determination provided by the embodiments of the present disclosure includes the following operation.

The second device receives the first identification information. The first identification information is transmitted by the first device(s) based on the first frequency domain resource(s).

In the third aspect, the apparatus for resource determination provided by the embodiments of the present disclosure is applied to the first device, and the apparatus for resource determination includes a determination unit.

The determination unit is configured to determine first frequency domain resource. The first frequency domain resource is used to transmit the first identification information of the first device to the second device.

In the fourth aspect, the apparatus for resource determination provided by the embodiments of the present disclosure is applied to the second device, and the apparatus for resource determination includes a receiving unit.

The receiving unit is configured to receive the first identification information. The first identification information is transmitted by the first device(s) based on the first frequency domain resource(s).

In the fifth aspect, the first device provided by the embodiments of the present disclosure includes a processor and a memory. The memory is configured to store a computer program, and the processor is configured to invoke and execute the computer program stored in the memory to perform the method for resource determination described above.

In the sixth aspect, the second device provided by the embodiments of the present disclosure includes a processor and a memory. The memory is configured to store a computer program, and the processor is configured to invoke and execute the computer program stored in the memory to perform the method for resource determination described above.

The chip provided by the embodiments of the present disclosure is used to implement the methods for resource determination described above.

Specifically, the chip includes a processor. The processor is configured to invoke and execute a computer program from a memory to cause a device on which the chip is mounted to execute the methods for resource determination described above.

The computer-readable storage medium provided by the embodiments of the present disclosure is used for storing a computer program, and the computer program causes the computer to execute the methods for resource determination described above.

The computer program product provided by the embodiments of the present disclosure includes computer program instructions, and the computer program instructions cause a computer to execute the methods for resource determination described above.

The computer program provided by the embodiments of the present disclosure causes the computer to execute the methods for resource determination described above when it is executed on the computer.

The embodiments of the present disclosure provide the methods for resource determination. The first device can determine its own first frequency domain resource. Based on this, multiple first devices can report the first identification information by using different frequency domain resources at the same time, so that interference among the multiple first devices when reporting information can be avoided, and transmission efficiency can be improved.

### BRIEF DESCRIPTION OF THE DRAWINGS

The accompanying drawings described herein are used to provide a further understanding of the present disclosure and constitute a part of the present disclosure. The schematic embodiments of the present disclosure and the description thereof are used to explain the present disclosure and do not constitute an improper limitation of the present disclosure.
FIG. 1 is a schematic diagram of an application scenario according to an embodiment of the present disclosure.
FIG. 2 is a schematic diagram of the architecture of an Ambient-Internet of Things (A-IoT) communication system provided by an embodiment of the present disclosure.
FIG. 3 is a schematic structural diagram of a radio frequency power harvesting module provided by an embodiment of the present disclosure.
FIG. 4 is a schematic diagram of a backscattering communication principle provided by an embodiment of the present disclosure.
FIG. 5 is a schematic diagram of a resistance load modulation principle provided by an embodiment of the present disclosure.
FIG. 6 is the first schematic diagram of the architecture of an Internet of Things communication system provided by an embodiment of the present disclosure.
FIG. 7 is the second schematic diagram of the architecture of an Internet of Things communication system provided by an embodiment of the present disclosure.
FIG. 8 is the first schematic flowchart of a method for resource determination provided by an embodiment of the present disclosure.
FIG. 9 is the first schematic diagram of a frequency domain resource range provided by an embodiment of the present disclosure.
FIG. 10 is a second schematic diagram of a frequency domain resource range provided by an embodiment of the present disclosure.
FIG. 11 is the first structural schematic diagram of the second information provided by an embodiment of the present disclosure.
FIG. 12 is the second structural schematic diagram of the second information provided by an embodiment of the present disclosure.
FIG. 13 is the third structural schematic diagram of the second information provided by an embodiment of the present disclosure.
FIG. 14 is the fourth structural schematic diagram of the second information provided by an embodiment of the present disclosure.
FIG. 15 is the second schematic flowchart of a method for resource determination provided by an embodiment of the present disclosure.
FIG. 16 is a schematic diagram of a scenario for resource determination provided by an embodiment of the present disclosure.
FIG. 17 is a schematic structural diagram of an apparatus 1700 for resource determination provided by an embodiment of the present disclosure.
FIG. 18 is a schematic structural diagram of an apparatus 1800 for resource determination provided by an embodiment of the present disclosure.
FIG. 19 is a schematic structural diagram of a communication device provided by an embodiment of the present disclosure.
FIG. 20 is a schematic structural diagram of a chip provided by an embodiment of the present disclosure.
FIG. 21 is a schematic block diagram of a communication system provided by an embodiment of the present disclosure.

### DETAILED DESCRIPTION

The technical solutions in the embodiments of the present disclosure will be described below with reference to the accompanying drawings in the embodiments of the present disclosure. It is apparent that the described embodiments are some embodiments of the present disclosure, but not all embodiments. Based on the embodiments in the present disclosure, all other embodiments obtained by those of ordinary skill in the art without making creative efforts fall within the scope of protection of the present disclosure.

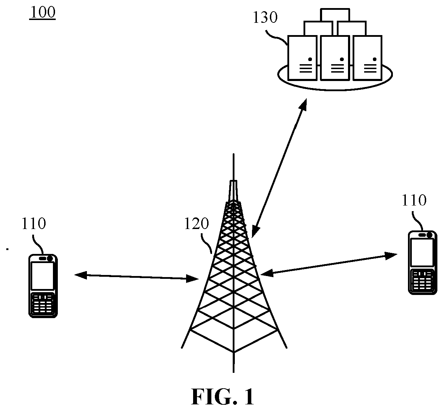

FIG. 1 is a schematic diagram of an application scenario according to an embodiment of the present disclosure.

As illustrated in FIG. 1, the communication system 100 may include the first devices 110 and the second device 120. The second device 120 may communicate with the first device 110 through an air interface. Multi-service transmission is supported between the first devices 110 and the second device 120.

It should be understood that the embodiments of the present disclosure are only illustrative of the communication system 100, but the embodiments of the present disclosure are not limited thereto. That is, the technical solutions of the embodiments of the present disclosure may be applied to various communication systems, such as a Long Term Evolution (LTE) system, an LTE Time Division Duplex (TDD), a Universal Mobile Telecommunication System (UMTS), an Internet of Things (IoT) system, a Narrow Band Internet of Things (NB-IoT) system, enhanced Machine-Type Communications (eMTC) system, a 5G communication system (also known as New Radio (NR) communication system), or future communication systems, etc.

In the communication system 100 illustrated in FIG. 1, the second device 120 may be an access network device that communicates with the first device 110. The access network device may provide communication coverage for a particular geographic area and may communicate with the first device 110 (for example, User Equipment (UE)) located within the coverage area.

The second device 120 may be an Evolutional Node B (eNB or eNodeB) in a Long Term Evolution (LTE) system, or a Next Generation Radio Access Network (NG RAN) device, or a base station (gNB) in an NR system, or a wireless controller in a Cloud Radio Access Network (CRAN), or the second device 120 may be a relay station, an access point, an in-vehicle device, a wearable device, a hub, a switch, a bridge, a router, or a network device in a future evolving Public Land Mobile Network (PLMN).

The first device 110 may be any first device including, but not limited to, the first device that employs a wired or wireless connection with the second device 120 or other first devices.

For example, the first device 110 may refer to an Ambient-Internet of Things (A-IOT) device, an access terminal, UE, a subscriber unit, a subscriber station, a mobile station, a mobile stage, a remote station, a remote terminal, a mobile device, a user terminal, a terminal, a wireless communication device, a user agent, or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device with wireless communication capabilities, a computing device or other processing device connected to a wireless modem, an in-vehicle device, a wearable device, a terminal device in a 5G network, or a terminal device in a future evolution network, or the like.

The first device 110 may be used for Device to Device (D2D) communication.

The wireless communication system 100 may further include a core network device 130 that communicates with the second device 120, and the core network device 130 may be a 5G core network (5G Core, 5G GC) device, for example, an Access and Mobility Management Function (AMF), an Authentication Server Function (AUSF), a User Plane Function (UPF), or a Session Management Function (SMF). Alternatively, the core network device 130 may also be an Evolved Packet Core (EPC) device of the LTE network, for example, a Session Management Function + Core Packet Gateway (SMF + PGW-C) device of the Core network. It should be understood that SMF + PGW-C can simultaneously implement the functions that SMF and PGW-C can implement. In the process of network evolution, the above-mentioned core network device may be called by other names, or a new network entity may be formed by dividing the functions of the core network, which is not limited by the embodiments of the present disclosure.

The various functional units in the communication system 100 may also establish connections through a next generation (NG) interface to enable communication.

For example, the first device 110 establishes an air interface connection with the access network device through the NR interface for transmitting user plane data and control plane signaling. The first device 110 may establish a control plane signaling connection with the AMF through the NG interface 1 (N1 for short). An access network device, such as a next generation radio access base station (gNB), may establish a user plane data connection with the UPF through the NG interface 3 (N3 for short). The access network device may establish a control plane signaling connection with the AMF through the NG interface 2 (N2 for short). The UPF may establish a control plane signaling connection with the SMF through the NG interface 4 (N4 for short). The UPF may interact user plane data with the data network through the NG interface 6 (N6 for short). The AMF may establish a control plane signaling connection with the SMF through the NG interface 11 (N11 for short). The SMF may establish a control plane signaling connection with the PCF through the NG interface 7 (N7 for short).

FIG. 1 illustrates exemplarily one second device 120, one core network device 130, and two first devices 110. Alternatively, the wireless communication system 100 may include multiple second devices 120, and the coverage range of each second device 120 may include other numbers of first devices 110, which is not limited in the embodiment of the present disclosure.

It should be noted that FIG. 1 merely illustrates a system to which the present disclosure is applicable in the form of an example, and of course, the method illustrated in the embodiments of the present disclosure may be applicable to other systems. Furthermore, the terms "system" and "network" are often used interchangeably herein. The term "and/or" herein is merely used for describing an association relationship between associated objects, and indicates that there may be three relationships, for example, A and/or B, which may indicate that A exists alone, A and B exist simultaneously, and B exists alone. In addition, the character "/" herein generally indicates that there is an "or" relationship between the associated objects. It should also be understood that the "indication" referred to in the embodiments of the present disclosure may be a direct indication, an indirect indication, or an indication that there is an association relationship. By way of example, A indicates B, which may mean that A directly indicates B, e.g., B may be acquired by A. It may also be indicated that A indirectly indicates B, for example, A indicates C, and B may be acquired by C. It can also be indicated that there is an association relationship between A and B. It should also be understood that the "correspondence" mentioned in the embodiments of the present disclosure may mean that there is a direct correspondence or an indirect correspondence between the two objects, or may mean that there is a correlation between the two objects, or may be a relationship between instruction and being instructed, configuration and being configured, or the like. It should also be understood that the "predefined" or "predefined rules" mentioned in the embodiments of the present disclosure may be realized by storing corresponding codes, tables, or other means that can be used to indicate relevant information in advance in devices (for example, including terminal devices and network devices), and the specific implementation method thereof is not limited in the present disclosure. For example, "predefined" may refer to defined in a protocol. It should also be understood that in the embodiments of the present disclosure, the "protocol" may refer to a standard protocol in the communication field, and may include, for example, an LTE protocol, an NR protocol, and related protocols applied to future communication systems, and the present disclosure is not limited thereto.

In order to facilitate understanding of the technical solutions of the embodiments of the present disclosure, the related technologies of the embodiments of the present disclosure will be described below, and the following related technologies may be arbitrarily combined with the technical solutions of the embodiments of the present disclosure as optional solutions, and all of them belong to the protection scope of the embodiments of the present disclosure.

The development of communication technology will have higher requirements for the price and power consumption of the first device, especially the A-IoT communication technology with low complexity, low cost and low power consumption will become the key technology of future communication network.

In the embodiments of the present disclosure, in the embodiments of the present disclosure, the A-IoT system may also be referred to as a Zero-Power system, and the A-IoT device may also be referred to as a Zero-Power device.

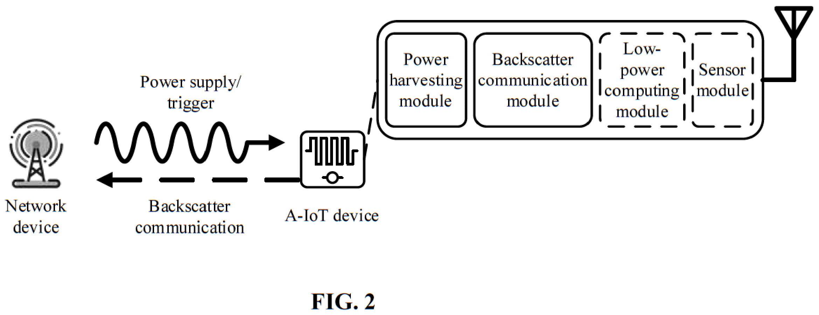

Referring to the schematic architectural diagram of the A-IoT communication system illustrated in FIG. 2, the A-IoT communication system may be constituted by a network device (i.e., the second device 120 above) and an A-IoT device (i.e., the first device 110 above). The network device is configured to send a wireless power supply signal and/or a downlink communication signal to the A-IoT device, and is also configured to receive a backscattering signal of the A-IoT device. A basic A-IoT device may include a power harvesting module, a backscattering communication module, a low power computing module, and a sensor module. In addition, the A-IoT device may also have a memory for storing some basic information (such as item identification, etc.), as well as sensing data such as ambient temperature and ambient humidity.

The key technologies of the A-IoT communication mainly include Radio Frequency Power Harvesting and Back Scattering. The so-called A-IoT device refers to the IoT device that uses various ambient powers, such as Radio Frequency energy, light energy, solar energy, thermal energy, mechanical energy and other ambient powers to drive itself. Such devices may have no energy reserve capacity or very limited energy storage capacity (such as capacitors using tens of microfarads (uF) of capacity). Compared with existing IoT devices, A-IoT devices have many advantages such as free of conventional batteries, maintenance-free, small size, low complexity, low cost, and long life cycle.

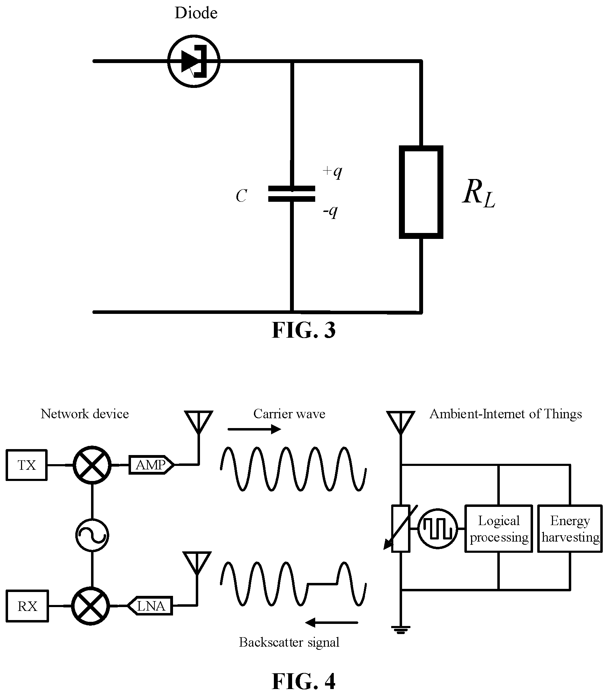

Referring to the schematic structural diagram of the radio frequency power harvesting module illustrated in FIG. 3, the radio frequency power harvesting module may include a diode, a capacitor C, and a resistor *R_{L}*. In practical application, the RF power harvesting module realizes the acquisition of space electromagnetic wave energy based on the principle of electromagnetic induction, and then obtains the power needed to drive A-IoT device, such as driving low-power demodulation and modulation modules, sensors and memory reading. That is, a traditional battery module may be eliminated in an A-IoT device.

Referring to a schematic diagram of the backscattering communication principle illustrated in FIG. 4, the A-IoT device receives a carrier signal sent by a network device, modulates the carrier signal, loads the information to be sent and radiates the modulated signal from an antenna, and this information transmission process is called backscattering communication.

It should be noted that backscattering and load modulation functions are inseparable. Load modulation completes the modulation process by adjusting and controlling the circuit parameters of the oscillation loop of the A-IoT device according to the beat of data stream to cause the parameters such as the size of the electronic tag impedance to be changed accordingly.

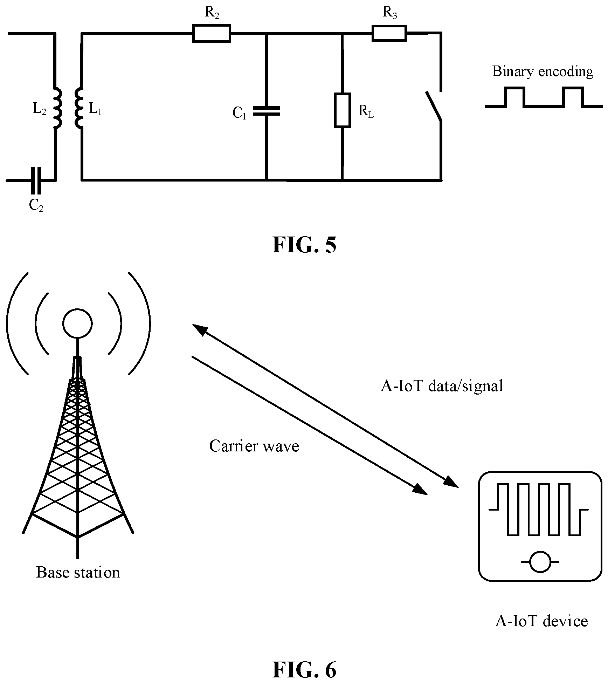

The load modulation technique may include resistance load modulation and capacitive load modulation. Referring to the schematic diagram of resistance load modulation principle illustrated in FIG. 5, in resistance load modulation, a resistor *R₃* may be connected in parallel to the load *R_{L}*, and the resistor *R₃* may be turned on or off based on the control of binary data stream. The on-off of resistor R3 will cause the change of circuit voltage, so Amplitude Shift Keying (ASK) is realized, that is, signal modulation and transmission are realized by adjusting the amplitude of backscattering signal of the A-IoT device. Similarly, in capacitive load modulation, the resonance frequency of the circuit may be changed by turning on and off the capacitor, and Frequency Shift Keying (FSK) can be realized, that is, signal modulation and transmission can be realized by adjusting the operating frequency of the backscattering signal of the A-IoT device.

It can be seen that the A-IoT device performs information modulation on the incoming wave signal by means of load modulation, thus realizing the backscattering communication process. Therefore, the A-IoT device has the following significant advantages.
(1) The A-IoT device may not actively transmit signals, and does not need complicated RF links, such as Power Amplifier (PA), RF filter, etc.
(2) The A-IoT device does not need to actively generate high-frequency signals, so it does not need high-frequency crystal oscillators.
(3) With the help of backscattering communication, the signal transmission of the A-IoT device does not need to consume the own power of the terminal.

The application scenarios of the A-IoT communication are introduced as follows.

The A-IoT communication may be widely used in all walks of life due to its remarkable advantages such as extremely low cost, zero power consumption and small size, such as logistics for vertical industries, intelligent warehousing, smart agriculture, energy and power, industrial Internet, etc. It may also be applied to personal applications such as smart wearable and smart home.

The A-IoT device may be classified into the following types based on the power sources and usage methods of A-IoT devices.

### 1) Passive A-IoT Devices

A-IoT devices do not need built-in batteries. When A-IoT devices approach network nodes (such as readers and writers of RFID systems), A-IoT devices are in the near-field range formed by antenna radiation of network nodes. Therefore, the A-IoT device antenna generates an induced current through electromagnetic induction, which drives the low-power chip circuit of the A-IoT device. Demodulation of a forward link signal (such as a downlink signal, that is, a link signal from a network device to an A-IoT device) and signal modulation of a backward link (such as an uplink signal, that is, a link signal from an A-IoT device to a network device) are implemented. For backscattering links, A-IoT devices transmit signals using backscatter implementations.

It may be seen that the passive A-IoT device does not need a built-in battery to drive it in either the forward link or the reverse link, and it is a real A-IoT device.

Passive A-IoT devices do not need batteries, and RF circuits and baseband circuits are very simple. For example, they do not need Low Noise Amplifier (LNA), Power Amplifier (PA), crystal oscillator, Analog to Digital Converter (ADC) and other devices, so they have many advantages such as small size, light weight, very cheap price and long service life.

### 2) Semi-passive A-IoT devices

Semi-passive A-IoT device itself is not equipped with conventional batteries, but it can use a power harvesting module to harvest ambient power, such as radio frequency signal energy, solar energy, thermal energy, mechanical vibration energy, etc., and store the harvested energy in an power storage unit (such as capacitor). After the power storage unit obtains power, it can drive the low-power chip circuit of the A-IoT device. The demodulation of the forward link signal and the signal modulation of the backward link are realized. For the backscattering link, the A-IoT device may transmit a signal using a backscattering method or an active transmission method, or may transmit a signal using an active transmission method.

It can be seen that semi-passive A-IoT devices do not need built-in batteries to drive either the forward link or the reverse link. Although the power stored by capacitors is used in work, the power comes from the ambient power harvested by the power harvesting module, so it is also a real A-IoT device.

Semi-passive A-IoT devices inherit many advantages of passive A-IoT devices, so they have many advantages such as small size, light weight, very cheap price and long service life.

### 3) Active A-IoT Devices

A-IoT devices used in some scenarios may also be active A-IoT devices, and such terminals can have built-in batteries (conventional batteries, such as dry batteries, rechargeable lithium batteries, etc.). The battery is used to drive the low-power chip circuit of A-IoT device, realize the demodulation of forward link signal and the signal modulation of backward link. However, for backscattering links, A-IoT devices use backscattering manner or active transmission manner to transmit signals. Therefore, the zero power consumption of this type of A-IoT device is mainly reflected in the fact that the signal transmission of the reverse link does not need the own power of the terminal, but uses backscattering manner. Although the active A-IoT device uses a battery, this type of active A-IoT device has extremely low power consumption and complexity, so it can have a battery with smaller capacity, thus realizing smaller cost and size. The built-in battery may also be used as a power storage unit for the power harvesting module to store the harvested ambient power, thus achieving a long maintenance cycle or even maintenance-free.

For the active A-IoT device, the built-in battery is used for powering to increase the communication distance of A-IoT device and improve the reliability of communication. Therefore, it can be applied in some scenarios that require relatively high communication distance and reading delay.

It should be noted that some A-IoT devices, such as semi-passive A-IoT devices or active A-IoT devices, may have the ability of active transmission, that is, the backlink may communicate by active transmission manner in addition to backscattering manner.

Based on the transmitter type of the A-IoT device, the A-IoT device may be classified into the following types.

### 1) First device type

This type of A-IoT device has a peak power consumption of about 1 microwatt (µW), has power storage capacity, an initial Sampling Frequency Offset (SFO) of up to 10^{X}ppm (parts per million), has neither a downlink amplifier nor an uplink amplifier, and performs uplink transmission by back scattering of carrier.

### 2) Second device type

This type of A-IoT device has a peak power consumption of less than or equal to several hundred µW, has power storage capacity, an initial SFO of up to 10^{X}ppm, has a downlink amplifier and/or has an uplink amplifier, and performs uplink transmission by backscattering of carrier.

### 3) Third device type

This type of A-IoT device has a peak power consumption of less than or equal to several hundred µW, power storage capacity, initial SFO of up to 10^{X}ppm, downlink amplifier and/or uplink amplifier, and uplink transmission is generated internally, which can also be called active transmission-based.

It should be understood that the above-mentioned A-IoT device types are given only as examples in the embodiments of the present disclosure, and the A-IoT system may include other device types, which are not limited in the embodiments of the present disclosure.

With the booming development of cellular IoT, the 3rd Generation Partnership Project (3GPP) has standardized IoT technologies such as NB-IoT, MTC, and RedCap, but there are still many scenarios where IoT communication needs cannot be met using related technologies. For example, in a harsh communication environment, the demand for extremely small-size terminal form and the demand for extremely low-cost Internet of Things communication in scenarios cannot be met by related technologies.

For harsh communication environment scenarios, some IoT scenarios may face extreme environments such as high temperature, extremely low temperature, high humidity, high pressure, high radiation or high-speed movement, such as ultra-high voltage substation, high-speed train track monitoring, environmental monitoring in alpine zone, industrial production line, etc. In these scenarios, existing IoT terminals will not work due to the working environment limitations of conventional power supplies. In addition, extreme working environments are also detrimental to IoT maintenance, such as replacing batteries.

The scenarios of the demand for extremely small-size terminal form can include food traceability, commodity circulation, intelligent wearable scenarios, etc. Such scenarios require terminals to have a very small size to be convenient for use in these scenarios. For example, IoT terminals for commodity management in the circulation link usually use the form of electronic labels, which are embedded in commodity packaging in a very small form. For another example, lightweight wearable devices can improve user experience while meeting user needs.

In addition, many IoT communication scenarios require the cost of IoT terminals to be low enough, thereby enhancing the competitiveness relative to other alternative technologies. For example, in logistics or warehousing scenarios, in order to facilitate the management of a large number of circulating items, an Internet of Things terminal may be attached to each item, so that the precise management of the whole process and cycle of logistics can be completed through the communication between the terminal and the logistics network. These scenarios require the price of IoT terminals to be competitive enough.

Therefore, in order to cover these unmet communication needs of IoT, it is also necessary to develop ultra-low-cost, extremely small-size, battery-free and maintenance-free IoT in cellular networks, and the A-IoT can just meet this demand.

Based on the discussion of A-IoT application scenarios in the 3rd Generation Partnership Project (3GPP) System Architecture (SA), A-IoT may be used in at least the following four types of scenarios.

### 1) Object recognition

The A-IoT is applied to object recognition scenarios, such as logistics, management of production line products, supply chain management and other scenarios.

### 2) Environmental monitoring

The A-IoT is applied to environmental monitoring scenarios, such as working environment, temperature and humidity of natural environment, harmful gas monitoring and other scenarios.

### 3) Positioning

The A-IoT is applied to positioning scenarios, such as indoor positioning, intelligent object finding, production line item positioning and other scenarios.

### 4) Intelligent control

The A-IoT is applied to intelligent control scenarios, such as intelligent control of various electrical appliances in smart homes (turning on and off air conditioners, adjusting temperature), intelligent control of various facilities in agricultural greenhouses (automatic irrigation, fertilization) and other scenarios.

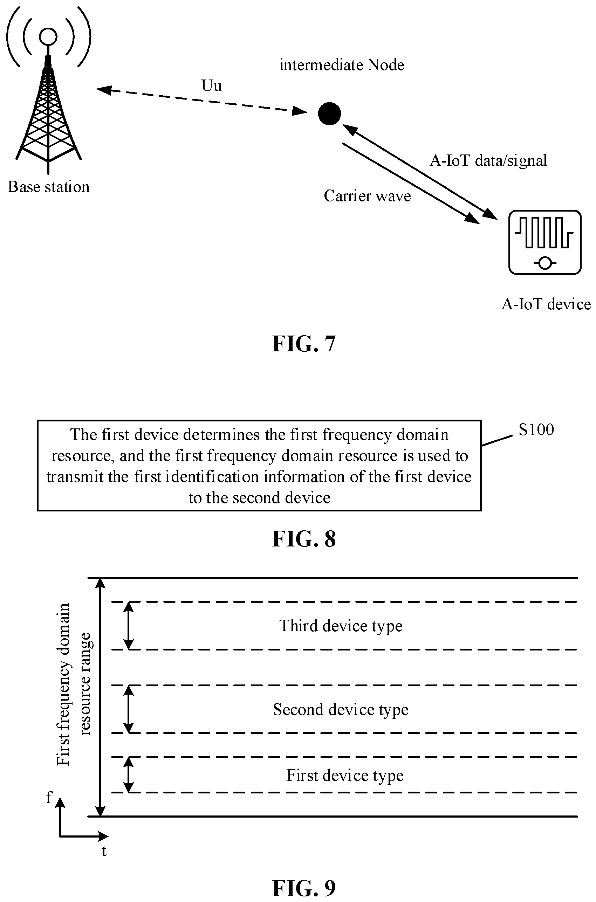

In a low power IoT based on a cellular network, referring to FIG. 6 (denoted as the first topology), the A-IoT device may transmit and receive carriers, data, or signals directly from a base station and send or backscatter data or channels to the base station. Alternatively, referring to FIG. 7 (denoted as the second topology), an Intermediate Node is provided in the low-power Internet of Things, and communication between the A-IoT and the base station is realized through the Intermediate Node, in which case, the Intermediate Node sends data or signals to the A-IoT device, and the A-IoT device sends or backscatters data or signals to the Intermediate Node, and a carrier used for the A-IoT device to perform backscattering may be sent by the Intermediate Node or sent by another Node. The Intermediate Node may be a terminal device, a base station device or an Integrated Access and Backhaul (IAB) Node.

As can be seen from FIG. 6 or FIG. 7, the A-IoT device can communicate directly with the base station or communicate with the base station through the Intermediate Node. The transmission of A-IoT is based on the scheduling of the base station. In FIG. 6, the A-IoT device communicates directly with the base station, so the base station can directly send the scheduling information to the A-IoT device. In FIG. 7, the A-IoT device communicates with the base station through the intermediate node, and the scheduling information sent by the base station is first sent to the Intermediate Node, and then sent by the Intermediate Node to the A-IoT device. In the above two topologies, the base station in the first topology and the Intermediate Node in the second topology are called readers, the A-IoT device may be called the device, the transmission from the reader to the device is called Reader to Device (R2D) transmission, and the transmission from the device to the reader is called Device to Reader (D2R) transmission.

The advantages of applying A-IoT devices to logistics and warehousing scenarios are introduced as follows.

In logistics and warehousing application scenarios, a large amount of packaging/goods need to be transferred, stored, loaded and unloaded and inventoried frequently at logistics stations or warehouses (tens of thousands of square meters). With the occurrence of warehouse ordering, goods inbound, goods management and goods outbound, a large amount of warehouse information will be produced, which generally has the characteristics of frequent data reading operation and large amount of data.

The A-IoT devices themselves have the characteristics of extremely low cost, small size, maintenance-free, durability, and long life. In logistics and warehousing application scenarios, by using A-IoT devices to record, save and update the information of goods, and building a logistics and warehousing system based on the A-IoT, operating costs can be reduced, and the efficiency of logistics and warehousing management is significantly improved, which helps to achieve smart logistics and smart warehousing.

Specifically, A-IoT technology can realize smart warehouse management and improve warehouse efficiency and productivity through the following aspects.

### 1) Batch and wide range reading

A-IoT tags support a greater number of simultaneous reads and a greater read and write range. When the goods arrive at the warehouse, wireless tags affixed to the goods can be read in batches (e.g., reading thousands of tags per second) to accurately obtain merchandise information such as size/weight, manufacturer, expiration date, serial number, production line, etc. The wireless label attached to the goods or containers in the warehouse will save their basic information and location information in the warehouse. By setting the central network node in the warehouse, all the goods in the warehouse can be identified in time and quickly, which is convenient for managers to know the inventory distribution and total amount in time and realize rapid prediction of storage demand.

### 2) Handling management

Locating and information updating of tags can be implemented. When the goods are moving in the warehouse, the network device can recognize and update the label information in time. When the corresponding goods need to be picked, the location of goods can be quickly located in the whole warehouse range, which greatly improves the sorting efficiency of goods.

In the above logistics and warehousing scenarios, it is necessary to read a large number of wireless tags of A-IoT devices in a short time. A-IoT devices can report information by the TDMA manner or FDMA manner. Compared with the TDMA manner, the FDMA manner can support multiple devices to report information at the same time, which has higher transmission efficiency and lower delay. In the process of batch reading the wireless tags of the A-IoT devices by the reader, the reader sends trigger command, query command or paging command by broadcasting or multicast, and in response to the signaling, the A-IoT device performs an information reporting process. When the A-IoT system supports FDMA, how to determine the corresponding frequency domain resources by the A-IoT devices is a problem that needs to be solved.

In view of this, the embodiments of the present disclosure provide a method for resource determination. The first device can determine its own first frequency domain resource. Based on this, multiple first devices can report the first identification information by using different frequency domain resources at the same time, so that interference among the multiple first devices when reporting information can be avoided, and transmission efficiency can be improved.

In order to facilitate understanding of the technical solutions of the embodiments of the present disclosure, the technical solutions of the present disclosure are described in detail below through specific embodiments. The above related technologies may be arbitrarily combined with the technical solutions of the embodiments of the present disclosure as optional solutions, and all of them belong to the protection scope of the embodiments of the present disclosure. Embodiments of the present disclosure include at least some of the following.

FIG. 8 illustrates a method for resource determination provided by an embodiment of the present disclosure. The method includes the following operation.

In operation S100, the first device determines the first frequency domain resource, and the first frequency domain resource is used to transmit the first identification information of the first device to the second device.

In one possible implementation, in a case that the first device receives the first information sent by the second device, the first device determines the first frequency domain resource, and transmits the first identification information of the first device to the second device on the first frequency domain resource.

In one possible implementation, in a case that the first device receives the first information sent by the second device, the first device determines the first frequency domain resource, and when the value of the counter associated with the first device satisfies a preset condition, the first device transmits the first identification information of the first device to the second device on the first frequency domain resource. In some embodiments, the preset condition is that the value of the counter is zero.

It should be noted that the first information may be trigger command, paging command, or query command sent by the second device in a broadcast or multicast manner. When the first device receives the trigger command, paging command, or query command, the first device determines the first frequency domain resource, and transmits the first identification information to the second device on the first frequency domain resource.

In some embodiments, the first information is used to trigger or instruct the first device to transmit the first identification information of the first device, or the first information is used to indicate the start of an inventory round.

In some embodiments, the first identification information may be N-bit information randomly generated by the first device. If N is 16, the first identification information is 16-bit random or pseudo-random number (RN16) information. It should be understood that RN16 is only one implementation method of the first identification information, and the embodiments of the present disclosure do not limit this.

In some embodiments, the first identification information may be determined based on the device identifier of the first device, for example, the first identification information includes all or part of the information of the device identifier of the first device, or the first identification information is obtained by calculating according to the device identifier of the first device.

It should be noted that the method for resource determination provided by the embodiments of the present disclosure may be applicable to various communication scenarios, such as a cellular communication scenario, a WiFi communication scenario, and an A-IoT system, and the embodiment of the present disclosure is not limited thereto.

It may be seen that in the method for resource determination provided by the embodiments of the present disclosure, the first device can determine its own first frequency domain resource, and based on this, multiple first devices can report the first identification information by using different frequency domain resources at the same time, so that interference among the multiple first devices when reporting information can be avoided, and transmission efficiency can be improved.

In some embodiments, the first device mentioned in the embodiments of the present disclosure may be a terminal having low power consumption, low complexity, and low cost. Such a low-power, low-complexity, and low-cost first device may be an A-IoT device (for example, an IoT terminal based on Ambient Power (AMP)), a low-power terminal, a low-cost terminal, a low-capability terminal (for example, a Redcap UE), or the like, and the embodiment of the present disclosure is not limited thereto.

The A-IoT device may include the first device based on AMP, that is, an AMP IoT terminal. The ambient power may include radio frequency energy, solar energy, thermal energy, mechanical energy, kinetic energy, and the like. From the perspective of power harvesting, an A-IoT device may also be referred to as an energy harvesting device, and can obtain energy required for communication, and can support a backscattering communication manner and/or an active transmission communication manner.

In the embodiments of the present disclosure, the first device determines the first frequency domain resource based on one or more of: identification information associated with the first device; device type information of the first device; identification information associated with the second device; available frequency domain resource information; the number of bits of the first identification information; a transmission block size (TBS) of the first identification information; a coding rate (CR) of the first identification information; a transmission rate of the first identification information; or the first parameter.

It should be noted that the identification information associated with the first device may include Electronic Product Code (EPC) information of the first device and/or the N-bit information randomly generated by the first device described above, such as RN16 information, which is not limited in the embodiment of the present disclosure.

In some embodiments, the identification information associated with the first device may further include other identification information, such as group identification information associated with the first device, service type identification information, and the like.

In an example, the first device determines a corresponding first frequency domain resource according to the associated identification information, and different identification information may be associated with different first frequency domain resources. It should be noted that the association relationship between the identification information and the first frequency domain resource may be predefined, or may be configured by a network, or the resource index corresponding to the first frequency domain resource is obtained by calculating according to the identification information, which is not limited in the embodiments of the present disclosure. Based on this, when there are multiple first devices, different first devices may select different first frequency domain resources according to the associated different identification information, thereby avoiding interference among different first devices.

It should be noted that the device type information of the first device may be one of the first device type, the second device type, or the third device type mentioned above, and at present, in the embodiments of the present disclosure, the device type information may be another device type other than the three device types mentioned above, and the embodiments of the present disclosure is not limited to this.

In an example, the first device determines a corresponding first frequency domain resource according to the associated device type information, and different device type information may be associated with different first frequency domain resources. It should be noted that the association relationship between the device type information and the first frequency domain resource may be predefined or configured by a network, and the embodiment of the present disclosure is not limited thereto. Based on this, when there are multiple first devices, the first devices of different device types may select the first frequency domain resources corresponding to the device types according to their own device types, thereby reducing interference among the first devices of different device types.

It should be noted that the identification information associated with the second device may include Electronic Product Code (EPC) information of the second device and/or N-bit information randomly generated by the second device, such as RN16 information, which is not limited in the embodiments of the present disclosure.

In some implementations, the identification information associated with the second device may be determined based on the Cell ID information. For example, if the second device is a base station, the identification information associated with the second device is a Cell ID corresponding to the base station, as illustrated in FIG. 6.

In some implementations, the identification information associated with the second device may be determined based on terminal identification (UE ID) information, and for example, the UE ID is a Radio Network Temporary Identity (RNTI). For example, if the second device is an intermediate node and the second device is a terminal, the identification information associated with the second device is a UE ID corresponding to the terminal, as illustrated in FIG. 7.

In one example, the first device determines the corresponding first frequency domain resource according to the identification information associated with the second device. Based on this, when there are multiple second devices, when the second devices transmits the first information to the first device, the first information may carry the identification information associated with the second devices, or the second devices may transmit indication information to the first device, and the indication information includes the identification information associated with the second device. Further, when the first device determines the corresponding first frequency domain resource, the first device may determine the corresponding first frequency domain resources based on the identification information associated with the second devices, so that when the first device transmits the first identification information to different second devices, different first frequency domain resources may be selected for transmission to avoid mutual interference.

In the embodiments of the present disclosure, the available frequency domain resource information includes the first frequency domain resource range of the first network in which the first device and the second device are located, and/or the second frequency domain resource range associated with the device type information of the first device.

It should be noted that the first frequency domain resource range refers to the frequency domain resource range available to the first network, and the second frequency domain resource range may refer to the frequency domain resource range allocated or configured for the device type information of the first device. The first frequency domain resource range may include the second frequency domain resource range, or the first frequency domain resource range and the second frequency domain resource range partially overlap, or the first frequency domain resource range and the second frequency domain resource range are different, which is not limited by the embodiment of the present disclosure.

In an example, the first device determines the corresponding first frequency domain resource according to the available frequency domain resource information, for example, within the frequency domain resource range of the available frequency domain resource information, the first device may determine the corresponding first frequency domain resource based on one or more of the identification information associated with the first device, the device type information of the first device, and the identification information associated with the second device.

In the embodiments of the present disclosure, the first frequency domain resource range is located in the first frequency band or the first carrier; or the first frequency domain resource range is located in a guard band of the first frequency band; or the first frequency domain resource range is located in the second frequency band or the second carrier.

The first frequency band is a frequency band used by a NR system or a LTE system, the first carrier is a carrier used by the NR system or the LTE system, the second frequency band is a different frequency band from the first frequency band, and the second carrier is a different carrier from the first carrier. It should be noted that the first network may use the same first frequency band or first carrier as the NR system or the LTE system, or the first network may use an independent second frequency band or second carrier, or the first network may use a guard band of the first frequency band in which the NR system or the LTE system is located, or the first frequency domain resource range may be determined based on one or more of information predefined in a protocol, the preconfigured information, and information configured by a network, which is not limited in the embodiment of the present disclosure.

It should be noted that usually, the first network can support a variety of device types, and different device types have different transmission methods. For example, the first device type and the second device type mentioned above perform transmission by backscattering manner, and the third device type performs transmission by active transmission manner. Since different device types may correspond to different frequency domain resource ranges, for the first device, the corresponding first frequency domain resource may be determined within the second frequency domain resource range corresponding to its device type.

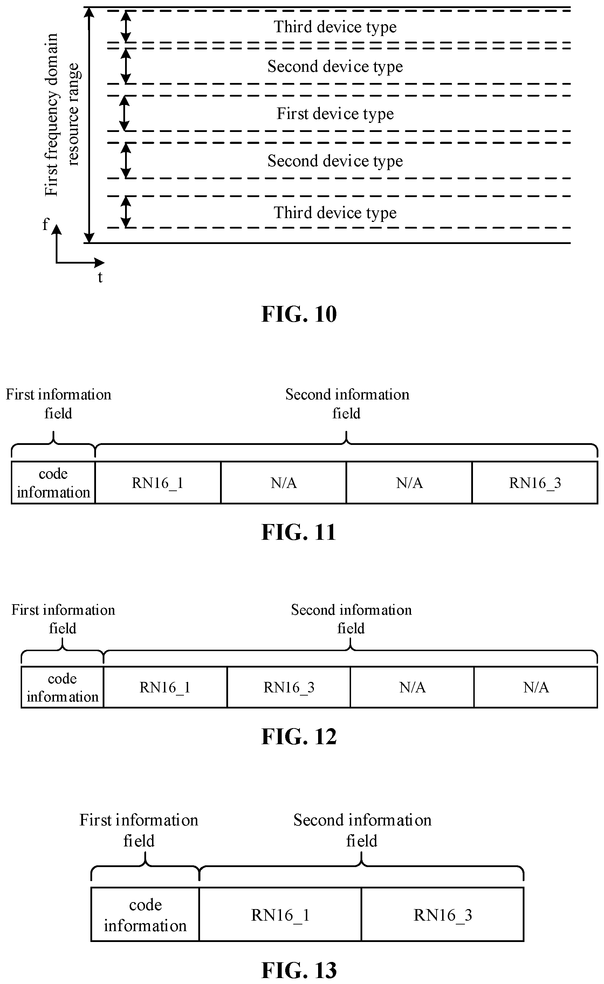

For example, referring to FIG. 9 and FIG. 10, in the first frequency domain resource range of the first network, corresponding frequency domain resource ranges are configured for the first device type, the second device type, and the third device type, respectively, and guard bands may be included among the frequency domain resource ranges corresponding to different device types. If the first device belongs to the first device type, the first frequency domain resource corresponding to the first device may be determined from the frequency domain resource range configured for the first device type in FIG. 9/10. If the first device belongs to the second device type, the first frequency domain resource corresponding to the first device may be determined from the frequency domain resource range configured for the second device type in FIG. 9/10. If the first device belongs to the third device type, the first frequency domain resource corresponding to the first device may be determined from the frequency domain resource range configured for the third device type in FIG. 9/10.

It should be noted that the first identification information is information to be transmitted from the first device to the second device, and the first frequency domain resource corresponding to the first device may be determined by a transmission parameter corresponding to the first identification information, and the transmission parameter includes but is not limited to one or more of the number of bits of the first identification information, the transmission block size of the first identification information, the coding rate of the first identification information, and the transmission rate of the first identification information, and the embodiments of the present disclosure is not limited thereto.

It should be understood that the coding rate of the first identification information is the coding rate associated with the first identification information, that is, the corresponding coding rate when the coding process or the line coding process is performed on the first identification information. The linear coding may include one or more of Manchester Coding, Miller Coding, Bi-Phase Space Coding, Pulse Interval Encoding (PIE) Coding, or the like. The Bi-Phase Space Coding is also referred to as FM0 Coding.

It should be understood that the transmission rate of the first identification information is the transmission rate associated with the first identification information, that is, the corresponding transmission rate when the first identification information is transmitted.

In an example, the first device first determines the number of frequency domain resources required to transmit the first identification information according to one or more of the number of bits of the first identification information, the transmission block size of the first identification information, the coding rate of the first identification information, and the transmission rate of the first identification information. For example, the available frequency domain resource information includes 20 Physical Resource blocks (PRBs). In this case, if the first device determines that 2 PRBs are required to transmit the first identification information according to one or more of the number of bits of the first identification information, the transmission Block size of the first identification information, the coding rate of the first identification information, and the transmission rate of the first identification information, the 20 PRBs are divided into 10 candidate frequency domain resources according to the 2 PRBs, that is, every 2 PRBs are used as one candidate frequency domain resource. In addition, the index value corresponding to each of the 10 candidate frequency domain resources may be determined, for example, the index value range corresponding to the 10 candidate frequency domain resources is set to [0, 9]. In this case, the candidate frequency domain resource having an index value of 0 includes the first PRB and the second PRB among the 20 PRBs, the candidate frequency domain resource having an index value of 1 includes the third PRB and the fourth PRB among the 20 PRBs, and so on. Accordingly, if the first device determines that 4 PRBs are required to transmit the first identification information, the 20 PRBs are divided into 5 candidate frequency domain resources according to the 4 PRBs, that is, every 4 PRBs are used as one candidate frequency domain resource. In addition, the index value corresponding to each of the 5 candidate frequency domain resources may be determined, for example, the index value range corresponding to the 5 candidate frequency domain resources is set to [0, 4]. In this case, the candidate frequency domain resource having an index value of 0 includes the first PRB, the second PRB, the third PRB, and the fourth PRB among the 20 PRBs, and the candidate frequency domain resource having an index value of 1 includes the fifth PRB, the sixth PRB, the seventh PRB, and the eighth PRB among the 20 PRBs, and so on. Finally, the first device can select the first frequency domain resource from the candidate frequency domain resources.

It can be understood that if the PRBs included in the available frequency domain resource information cannot be divided by the number of frequency domain resources required by the first device, a part of the frequency domain resources in the available frequency domain resource information may be discarded, for example, a part of the frequency domain resources with the highest or lowest frequency domain position in the available frequency domain resource information may be discarded, which is not limited in the embodiment of the present disclosure.

It should be noted that when the first device selects the first frequency domain resource from the candidate frequency domain resources, the first device may randomly select the first frequency domain resource, or may select the first frequency domain resource from the candidate frequency domain resources according to the determined index value.

In a possible implementation, the first device randomly selects the first frequency domain resource from candidate frequency domain resources.

It should be noted that the candidate frequency domain resources are determined according to the available frequency domain resource information. If there are D candidate frequency domain resources, and D is an integer greater than or equal to 1, further, the first device may randomly select one frequency domain resource from the D candidate frequency domain resources as the first frequency domain resource.

For example, if the available frequency domain resource information is the first frequency domain resource range, and it is determined that eight candidate frequency domain resources are included in the first frequency domain resource range, the first device randomly selects one frequency domain resource from the eight candidate frequency domain resources as the first frequency domain resource.

For example, if the available frequency domain resource information is the second frequency domain resource range, that is, the frequency domain resource range corresponding to the device type information of the first device, and it is determined that the second frequency domain resource range includes four candidate frequency domain resources, then the first device randomly selects one frequency domain resource from the four candidate frequency domain resources as the first frequency domain resource.

In another possible implementation, the first device selects the first frequency domain resource from the candidate frequency domain resources according to the determined index value.

It should be noted that the first device may firstly determine the first index value according to one or more of the identification information associated with the first device, the device type information of the first device, the identification information associated with the second device, and the first parameter, and then select the first frequency domain resource from the candidate frequency domain resources according to the first index value.

In an example, the first device determines the first index value according to identification information associated with the first device.

For example, after randomly generating the RN 16 information, the first device determines a decimal value corresponding to the RN 16 information, and further determines the first index value based on the decimal value.

For example, the first device determines the first index value according to A bits in the EPC information of the first device, that is, if the EPC information of the first device includes B bits, where A is less than or equal to B, or A is equal to B, or A is less than B, the A bits may be A bits at the most significant position or the least significant position in the EPC, and then the first device determines a decimal value corresponding to the A bits, and then determines the first index value based on the decimal value.

In an example, the first device determines the first index value according to the identification information associated with the first device and the identification information associated with the second device.

For example, if the identification information associated with the first device is RN16 information or EPC information, and the identification information associated with the second device is C bits, a final bit sequence may be determined based on all or part of the bits in the RN16 information or EPC information and all or part of the C bits, and finally a decimal value corresponding to the final bit sequence may be determined, and the first index value may be determined based on the decimal value.

It should be noted that after the decimal value N is obtained in the above manner, the first index value *N_{ID}* corresponding to the decimal value may be determined according to the following equation (1), which is shown as follows: ${N}_{ID} = mod \left(N, M\right)$ (1)

Here, N represents a decimal value determined according to the above manner, M represents the number of candidate frequency domain resources described above, *mod* represents modulo operation.

In the embodiments of the present disclosure, the first parameter is determined based on the first information sent by the second device. The first information is used to trigger or instruct the first device to transmit the first identification information of the first device.

It should be noted that the first information sent by the second device to the first device carries the first parameter, or the first device determines the first parameter according to the first information, and the embodiments of the present disclosure are not limited thereto.

It should be noted that in a case that the first device receives the first information sent by the second device, the first device firstly determines the first parameter according to the first information, then determines a corresponding first frequency domain resource according to the first parameter, and finally transmits the first identification information to the second device on the first frequency domain resource.

In an example, the first device determines the first index value according to the first parameter.

In the embodiments of the present disclosure, the first device determines a value of a counter of the first device based on the first parameter.

It should be noted that the first device firstly determines the integer q based on the first parameter (denoted as Q), and then sets a value of the counter based on the integer q, the value may be an initial value of the counter, and the embodiment of the present disclosure is not limited thereto.

Exemplarily, the first device randomly generates the parameter q in the range of [0, G-1] (including two values of 0 and (G-1)). The value of the parameter G is related to the first parameter q and the number M of candidate frequency domain resources, for example, G =2^{Q}× M.

It should be noted that after the first device determines the value of the counter of the first device, it is necessary to determine the first index value based on the value of the counter.

In some embodiments, the first index value *N_{ID}* is determined by the following manner: ${N}_{ID} = mod \left(q, M\right)$ (2)

Here, q represents a parameter randomly generated based on the first parameter, M represents the number of candidate frequency domain resources, and mod represents modulo operation.

In some embodiments, each time the third information sent by the second device is received, the first device adjusts the value of the counter of the first device until the value of the counter satisfies a preset condition, determines the first frequency domain resource according to a current value of the counter, or randomly selects the first frequency domain resource. The third information is used for the first device to adjust the value of the counter.

It should be noted that the third information may be query repetition (for example, QueryRep) command, and the first device adjusts the value of the counter once every time the first device receives the query repetition command sent by the second device.

In some embodiments, the adjustment step size for adjusting the value of the counter by the first device is related to the number of candidate frequency domain resources.

In some embodiments, in a case that the first device receives the query repetition command one, the first device reduces the value of the counter by the number of candidate frequency domain resources M until the value of the counter satisfies a preset condition.

In some embodiments, if the value of the counter satisfies the preset condition, the current value of the counter is determined, and the first index value is determined according to the current value. For example, the current value is used as the first index value, and then the frequency domain resource corresponding to the first index value among the candidate frequency domain resources is determined as the first frequency domain resource, or the first frequency domain resource is randomly selected from the candidate frequency domain resources, which is not limited in the embodiment of the present disclosure.

In the embodiments of the present disclosure, in a case that the value of the counter of the first device satisfies the preset condition, the first device transmits the first identification information of the first device to the second device based on the first frequency domain resource.

In the embodiments of the present disclosure, the preset condition includes at least any one of: the value of the counter of the first device being equal to zero, or the value of the counter of the first device being less than the first numerical value. The first numerical value is determined according to the number of candidate frequency domain resources.

In the embodiments of the present disclosure, the first numerical value is determined based on information predefined in a protocol, preconfigured information, information configured by a network, or indication information sent by a reader.

For example, in a case that the query repetition command is received once, the first device reduces the value of the counter by 1. In a case that the value of the counter is equal to zero, the first device transmits the first identification information of the first device to the second device on the first frequency domain resource according to the determined first frequency domain resource.

For example, in a case that the query repetition command is received once, the first device reduces the value of the counter by M. In a case that the value of the counter is less than the first numerical value (for example, the first numerical value is equal to M), the first device uses the current numerical value of the counter as the first index value, determines the frequency domain resource corresponding to the first index value as the first frequency domain resource, and transmits the first identification information of the first device to the second device on the first frequency domain resource.

In the embodiments of the present disclosure, when the value of the counter of the first device is less than the first numerical value, in a case that the third information sent by the second device is received, the first device does not adjust the value of the counter of the first device.

It should be noted that if the value of the counter of the first device is less than the first numerical value, and the current value of the counter may be an initial value or a value after multiple times of adjustments, then the first device no longer adjusts the value of the counter after receiving the third information.

For example, the number M of candidate frequency domain resources is 4, which indicates that four available frequency domain resources are included at the same time, the first value is equal to M, that is, the first value is 4, the second device transmits first information (for example, a query command) to the first device, the first information carries the first parameter Q, and Q is 3. The first device determines q according to the first parameter Q and the number M of candidate frequency domain resources, that is, q corresponds to an integer randomly generated between [0, 2Q^{M}-1] = [0, 31], for example, q is 5, then 5 is taken as an initial value of the counter of the first device. When the first device receives the third information (for example, a query repetition signaling), the initial value of the counter is reduced by 4, at which time the value of the counter is 1, which is less than the first value. Therefore, the first device takes the current value 1 of the counter as an index value, and determines the frequency domain resource having an index value of 1 among the candidate frequency domain resources as the first frequency domain resource.

In the embodiments of the present disclosure, the first frequency domain resource is related to a reference position. The reference position is determined based on one or more of: a center frequency point position or a frequency domain starting position corresponding to a frequency band or carrier used by the first network in which the second device is located; a frequency domain starting position, a frequency domain center position, or a frequency domain end position of frequency domain resource used by the first network in which the second device is located; a frequency domain starting position, a frequency domain center position or a frequency domain end position corresponding to a channel or preamble sent by the second device; a frequency domain position of a carrier for the first device to perform backscattering; information predefined in a protocol; preconfigured information; or information configured by a network.

It should be noted that the frequency domain resource position of the first frequency domain resource may be determined with respect to the reference position. For example, an index value may also be configured for the reference position in advance, and after the first device determines the first index value according to the above, the first frequency domain resource may be quickly determined based on the index value of the reference position and the first index value.

In the embodiments of the present disclosure, after the first device determines the first frequency domain resource and transmits the first identification information to the second device on the first frequency domain resource, the method further includes the following operation. If the second information sent by the second device is received, the first device transmits the second identification information of the first device on the second frequency domain resource. The second information is associated with the first identification information, and the second frequency domain resource is associated with the first frequency domain resource.

It should be noted that, if the second information sent by the second device is received, the first device needs to determine the second frequency domain resource, and then sends the second identification information of the first device to the second device on the second frequency domain resource.

It should be noted that the second identification information may be device identification information of the first device, which may include Protocol Control (PC) information and/or EPC information, and the embodiments of the present disclosure is not limited thereto.

It may be understood that the first device firstly acknowledges whether the communication between the first device and the second device is normal based on the first identification information, that is, whether the second device can receive the information of the first device, and then transmits its own device identification information to the second device, which can improve the efficiency of data transmission.

In the embodiments of the present disclosure, the first frequency domain resource is the same as the second frequency domain resource, or the second frequency domain resource is determined according to the first frequency domain resource and a frequency domain offset value.

It should be noted that the first device may determine the second frequency domain resource based on the first frequency domain resource, for example, the first frequency domain resource and the second frequency domain resource are the same frequency domain resource, or the second frequency domain resource has a frequency domain offset value with respect to the first frequency domain resource.

In the embodiments of the present disclosure, the frequency domain offset value is determined based on one or more of: information predefined in a protocol; preconfigured information; information configured by a network; indication information of the second device; or autonomously determining of the first device.

It may be understood that the first frequency domain resource used by the first device when transmitting the first identification information is different from the second frequency domain resource used when transmitting the second identification information, so that the frequency diversity effect can be obtained and the transmission reliability can be improved.

It should be noted that the first device may determine the second frequency domain resource based on the above-described method of determining the first frequency domain resource, and since the method for determining the first frequency domain resource has been described in detail above, the present embodiment will not be repeated here.

The above embodiments introduce a method of determining the first frequency domain resource by the first device, so that it is supported that the first identification information can be transmitted by the FDMA manner, because the FDMA transmission manner is supported, different first devices may transmit their own first identification information to the second device in different frequency domain resources, and the second device performs detection on the multiple frequency domain resources, and the second device may detect all of the first identification information, a part of the first identification information or no first identification information. If the first identification information is detected by the second device, the second device transmits the second information, and the second information includes all of the first identification information detected by the first device. The method of how the second device transmits the second information is described below.

In the embodiments of the present disclosure, the first device receives the second information. The second information is transmitted by the second device after receiving the first identification information. The second information includes at least: the first information field and/or the second information field.

The first information field is used to indicate that the second information is acknowledge (ACK) information. The second information field includes the first identification information.

It should be noted that the second information is transmitted by the second device in the form of multicast/broadcast. In this case, the first device that has not successfully sent the first identification information to the second device or has not sent the first identification information may also receive the second information, and the first device may determine whether the first identification information sent by itself to the second device is successfully sent according to the second information.

In the embodiments of the present disclosure, the first information field includes at least any one of: an ACK character; the first bit sequence; or code information.

For example, if the first information field includes the Acknowledge character (ACK), the ACK is used to indicate that the second information is ACK information, or if the first information field includes the first bit sequence, the first bit sequence is used to indicate that the second information is the ACK information, or if the first information field includes code information, the code information is used to indicate that the second information is the ACK information.

In the embodiments of the present disclosure, the second information field includes K sub-information field(s), and the K sub-information field(s) carries one or more pieces of first identification information. The one or more pieces of first identification information is all of the first identification information, received by the second device, sent by the at least one first device. K is an integer greater than or equal to 1.

It should be noted that the second information field includes all of the first identification information detected by the second device.

In the embodiments of the present disclosure, a value of K is determined according to the number of the one or more pieces of first identification information, or according to the number of candidate frequency domain resources.

In the first possible implementation, the number of sub-information fields in the second information field is determined according to the number of the one or more pieces of first identification information.

It should be noted that, if S represents the number of the one or more pieces of first identification information detected by the second device, the second information field includes S sub-information fields. For another example, if S represents the number of one or more pieces of first identification information detected by the second device, the length corresponding to the second information field is determined based on S and W, that is, the length corresponding to the second information field is equal to S × W, where W represents the number of bits corresponding to the first identification information.

In the second possible implementation, the number of sub-information fields in the second information field is determined according to the number of candidate frequency domain resources.

It should be noted that, if the number of candidate frequency domain resources is M, the second information field includes M sub-information fields, and each sub-information field corresponds to one candidate frequency domain resource among the M candidate frequency domain resources, respectively. For another example, if the number of candidate frequency domain resources is M, the length corresponding to the second information field is determined based on M and W, for example, the length corresponding to the second information field is equal to M × W, where W represents the number of bits corresponding to the first identification information.

For example, assuming that the number M of candidate frequency domain resources is 4, that is, the number of available frequency domain resources at the same time is 4, at a certain time, three first devices transmit first identification information to the second device at the same time, the indexes of frequency domain resources used by the three first devices are index 0, index 1, and index 3, respectively, the first device identifications sent by them correspond to RN16_1, RN16_2, and RN16_3, respectively, RN16_1 and RN16_3 are detected by the second device, and the second device transmits the second information, and the second information may include the following information fields according to the above two possible implementation methods:
For the first possible implementation, for example, the structure of the second information may be referred to FIG. 11 and FIG. 12. The second information includes the first information field (the first information field is code information in FIG. 11 and FIG. 12), and the first information field is used for indicating that the second information is ACK information. For example, the first information field includes a bit sequence "01" for indicating that the second information is ACK information. N/A indicates that the information of the information field is undefined, or determined based on a special bit or a padding bit, or an invalid bit. The second information field includes four sub-information fields, and the number of the sub-information fields is the same as the number of candidate frequency domain resources. In FIG. 11, the orders of the sub-information fields have a corresponding relationship with the frequency domain resource indexes, that is, the sub-information fields from left to right (or from right to left) correspond to the orders of the four candidate frequency domain resource indexes from low to high, and the second device detects the first identification information on which frequency domain resource, then carries the first identification information in the corresponding sub-information field of the second information field. As illustrated in FIG. 11, the second device detects RN16_1 and RN16_3 in the frequency domain resource index 0 and frequency domain resource index 3, respectively, so that RN16_1 and RN16_3 are carried in the first sub-information field and the fourth sub-information field of the second information field, and invalid bits are carried in the second sub-information field and the third sub-information field of the second information field. In FIG. 12, the orders of the sub-information fields do not have a corresponding relationship with the frequency domain resource indexes, and the second device sequentially carries the detected first identification information in the corresponding sub-information fields of the second information field. As illustrated in FIG. 12, the second device detects RN16_1 and RN16_3 in the frequency domain resource index 0 and frequency domain resource index 3, respectively, so that RN16_1 and RN16_3 are carried in the first two sub-information fields of the second information field, and the last two sub-information fields carry invalid bits. In the present embodiment, the bit length of the second information may be determined based on the number of bits of the first identification information and the number of candidate frequency domain resources, and additional signaling indicating bit length information is not required.

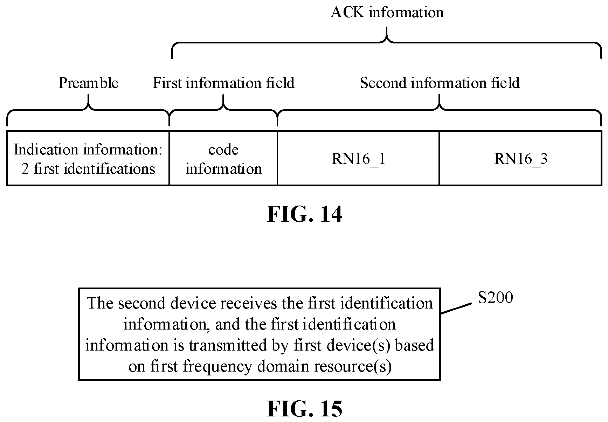

For the second possible implementation, for example, the structure of the second information may be referred to FIG. 13 and FIG. 14. The first information field includes the first information field for indicating that the second information is ACK information. For example, the first information field includes a bit sequence "01" for indicating that the second information is ACK information, and the number of sub-information fields included in the second information field is determined based on the number of first identification information detected by the second device. Since the second device detects RN16_1 and RN16_3 in the frequency domain resource index 0 and frequency domain resource index 3, respectively, two sub-information fields are included in the second information field, and two sub-information fields carry RN16_1 and RN16_3, respectively. In the present embodiment, since the number of sub-information fields included in the second information field is related to the number of first identification information detected by the second device, additional indication information is required for indicating the number of bits corresponding to the second information or the number of first identification information included in the second information. For example, when the second device transmits the second information, a preamble portion is included before the second information, and the number of first identification information included in the second information is indicated by the preamble, and as illustrated in FIG. 14, the preamble includes indication information for indicating that the ACK information includes two first identifications.

It should be noted that, after receiving the second information sent by the second device, the first device may determine whether its own first identification information is successfully sent to the second device by searching all the first identification information included in the second information, and if the transmission is successful, the second identification information of the first device may be sent to the second device.

In summary, in the method for resource determination provided by the embodiments of the present disclosure, the first device can determine its own first frequency domain resource, and based on this, multiple first devices can report the first identification information by using different frequency domain resources at the same time, so that interference among multiple first devices when reporting information can be avoided, and transmission efficiency can be improved.

The method for resource determination according to the embodiments of the present invention has been described in detail above from the perspective of the first device with reference to FIG. 8, and the method for resource determination according to the embodiments of the present invention will be described in detail below from the perspective of the second device with reference to FIG. 15. It should be understood that the operations performed by the second device correspond to the operations performed by the first device, and repeated descriptions will be appropriately omitted hereinafter for brevity.

FIG. 15 illustrates a method for resource determination provided by an embodiment of the present disclosure. The method may include the following operation.

In operation S200, the second device receives the first identification information, and the first identification information is transmitted by the first device(s) based on first frequency domain resource(s).

In one possible implementation, in a case that the first device(s) receives the first information sent by the second device, the first device(s) determines the first frequency domain resource(s), and transmits the first identification information of the first device(s) to the second device on the first frequency domain resource(s).

It should be noted that the second device may be a node that communicates with the first device, for example, the second device may be an AP in a WiFi system or a base station in a cellular system, or may be an Internet of Things node, a sensor, or the like in an A-IoT, which is not limited in the embodiments of the present disclosure.

It should be noted that when the first device is an A-IoT terminal, the second device may include an AMP Energizer.

In the embodiments of the present disclosure, before the second device receives the first identification information, the method further includes the following operation. The second device broadcasts/multicasts the first information. The first information is used to trigger the first device(s) to transmit the first identification information to the second device.

It should be noted that the first information may be trigger command or query command sent by the second device in a broadcast or multicast manner. When the first device(s) receives the trigger command or query command, the first device(s) determines the first frequency domain resource(s), and transmits the first identification information to the second device on the first frequency domain resource(s).

In the embodiments of the present disclosure, after the second device receives the first identification information, the method further includes the following operation. The second device broadcasts/multicasts the second information, and the second information is used to trigger the first device(s) to transmit the second identification information to the second device. The second information includes at least: the first information field, and/or the second information field.

The first information field is used to indicate that the second information is ACK information, and the second information field is used to indicate whether the first identification information of the first device(s) is successfully sent.

It should be noted that the second device receives multiple pieces of first identification information sent by one or more first devices on different frequency domain resources, and then the second device generates the second information based on the multiple pieces of first identification information, and broadcasts/multicasts the second information to inform the one or more first devices whether the first identification information of the first device(s) is successfully sent, and triggers the first device(s) to transmit its (their) own second identification information to the second device.

In the embodiments of the present disclosure, after the second device broadcasts/multicasts the second information, the method further includes the following operation. The second device receives the second identification information, and the second identification information is transmittedby the first device(s) based on the second frequency domain resource(s).

The method for resource determination provided by the embodiments of the present disclosure will be described below with reference to specific application scenarios.

### Embodiment 1

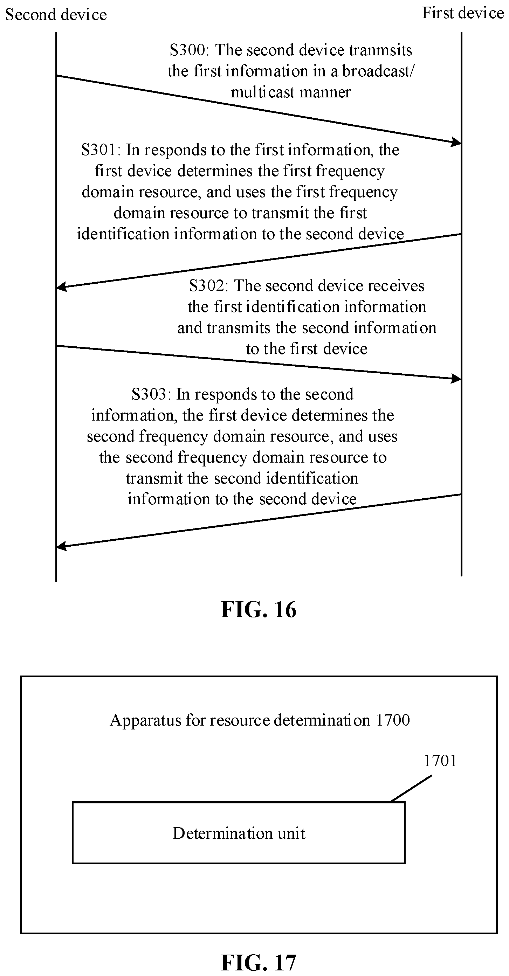

In this embodiment, the first device is an A-IoT terminal, and the second device is a reader. Referring to FIG. 16, the specific operations include the operations S300 to S303.

In operation S300, the second device transmits the first information in a broadcast/multicast manner.

Specifically, the reader (second device) transmits trigger command or query command (first information) in a broadcast/multicast manner.

In operation S301, the first device(s) determines the first frequency domain resource(s) in response to the first information, and transmits the first identification information to the second device by using the first frequency domain resource(s).

Specifically, the A-IoT terminal (first device) determines a corresponding first frequency domain resource in response to trigger command or query command, and transmits the first identification information to the reader on the first frequency domain resource. The first identification may be, for example, N-bit information randomly generated by the first device, such as RN16.

In operation S302, the second device receives the first identification information and sends the second information to the first device.

Specifically, after receiving the first identification information, the reader transmits the second information including ACK information associated with the RN16 in a broadcast/multicast manner.

In operation S303, the first device determines the second frequency domain resource in response to the second information, and transmits the second identification information to the second device by using the second frequency domain resource.

Specifically, after receiving the second information and determining that the first identification information of the A-IoT terminal is successfully sent to the reader according to the second information, the A-IoT terminal may determine the second frequency domain resource, and then transmit the second identification information to the reader on the second frequency domain resource. The second identification information includes the device identification information.

Based on the above processes, the reader can obtain device identification information of one or more first devices, so as to issue control commands or indication information to corresponding first devices according to different device identification information.

The preferred embodiments of the present disclosure have been described in detail above with reference to the accompanying drawings, but the present disclosure is not limited to the specific details in the above embodiments, and a variety of simple modifications may be made to the technical scheme of the present disclosure within the scope of the technical concept of the present disclosure, and these simple modifications all belong to the protection scope of the present disclosure. For example, each specific technical feature described in the above detailed description may be combined in any suitable manner unless there is no contradiction, and various possible combinations will not be further described in this application in order to avoid unnecessary repetition. As another example, any combination of various embodiments of the present disclosure may be made, and as long as it does not depart from the idea of the present disclosure, it should also be regarded as the disclosed content of the present disclosure. For another example, on the premise that there is no conflict, each embodiment and/or the technical features in each embodiment described in the present disclosure can be arbitrarily combined with the prior art, and the technical solution obtained after the combination should also fall within the protection scope of the present disclosure.

It should also be understood that in the various method embodiments of the present disclosure, the size of the sequence numbers of the above-described processes does not mean the order of the execution order, and the execution order of each process should be determined by its function and internal logic, and should not constitute any limitation on the implementation process of the embodiments of the present disclosure. Further, in the embodiments of the present disclosure, the terms "downlink", "uplink", and "sidelink" are used to indicate a transmission direction of a signal or data. The "downlink" is used to indicate that the transmission direction of the signal or data is the first direction transmitted from the station to the UE of the cell, "uplink" is used to indicate that the transmission direction of the signal or data is the second direction transmitted from the UE of the cell to the station, and "sidelink" is used to indicate that the transmission direction of the signal or data is the third direction transmitted from the UE 1 to the UE 2. For example, "downlink signal" means that the transmission direction of the signal is the first direction. In addition, in the embodiments of the present disclosure, the term "and/or" is merely used for describing an association relationship between associated objects, indicating that there may be three kinds of relationships. Specifically, A and/or B may represent three cases in which A exists alone, A and B exist simultaneously, and B exists alone. In addition, the character "/" herein generally indicates that there is an "or" relationship between the associated objects.

FIG. 17 is a schematic diagram of a structure composition of a resource determination device 1700 provided by an embodiment of the present disclosure. The apparatus is applied to the first device. As illustrated in FIG. 17, the apparatus 1700 for resource determination includes a determination unit 1701.

The determination unit 1701 is configured to determine a first frequency domain resource. The first frequency domain resource is used to transmit the first identification information of the first device to the second device.

In some embodiments, the first frequency domain resource is determined based on one or more of: identification information associated with the first device; device type information of the first device; identification information associated with the second device; available frequency domain resource information; the number of bits of the first identification information; a transmission block size (TBS) of the first identification information; a coding rate (CR) of the first identification information; a transmission rate of the first identification information; or the first parameter.

In some embodiments, the available frequency domain resource information includes the first frequency domain resource range of the first network in which the first device and the second device are located, and/or the second frequency domain resource range associated with device type information of the first device.

In some embodiments, the first frequency domain resource range is located in the first frequency band or the first carrier; or the first frequency domain resource range is located in a guard band of the first frequency band; or the first frequency domain resource range is located in the second frequency band or the second carrier.

The first frequency band is a frequency band used by a NR system or a LTE system, the first carrier is a carrier used by the NR system or the LTE system, the second frequency band is a different frequency band from the first frequency band, and the second carrier is a different carrier from the first carrier.

In some embodiments, the first parameter is determined based on the first information sent by the second device, and the first information is used to trigger the first device to send the first identification information of the first device.

In some embodiments, the apparatus 1700 for resource determination may further include a transmission unit. The transmission unit is configured to transmit the second identification information of the first device on the second frequency domain resource if the second information sent by the second device is received. The second information is associated with the first identification information, and the second frequency domain resource is associated with the first frequency domain resource.

In some embodiments, the first frequency domain resource is the same as the second frequency domain resource, or the second frequency domain resource is determined according to the first frequency domain resource and a frequency domain offset value.

In some embodiments, the frequency domain offset value is determined based on one or more of: information predefined in a protocol; preconfigured information; information configured by a network; indication information of the second device; or autonomously determining of the first device.

In some embodiments, the first frequency domain resource is related to a reference position, and the reference position is determined based on one or more of: a center frequency point position or a frequency domain starting position corresponding to a frequency band or carrier used by the first network in which the second device is located; a frequency domain starting position, a frequency domain center position or a frequency domain end position of frequency domain resource(s) used by the first network in which the second device is located; a frequency domain starting position, a frequency domain center position or a frequency domain end position corresponding to a channel or preamble sent by the second device; a frequency domain position of a carrier for the first device to perform backscattering; information predefined in a protocol; preconfigured information; or information configured by a network.

In some embodiments, the determination unit 1701 may be further configured to determine a value of a counter of the first device based on the first parameter.

In some embodiments, the apparatus 1700 for resource determination may further include an adjustment unit. The adjustment unit is configured to, in a case that each time the third information sent by the second device is received, adjust a value of a counter of the first device until the value of the counter satisfies a preset condition, and determine the first frequency domain resource according to a current value of the counter, or randomly select the first frequency domain resource. The third information is used for the first device to adjust the value of the counter.

In some embodiments, the adjustment step size at which the adjustment unit adjusts the value of the counter is related to the number of candidate frequency domain resources.

In some embodiments, the transmission unit may be further configured to transmit the first identification information of the first device to the second device based on the first frequency domain resource in a case that a value of a counter of the first device satisfies a preset condition.

In some embodiments, the preset condition includes at least any of: the value of the counter of the first device being equal to zero; or the value of the counter of the first device being less than the first numerical value. The first numerical value is determined according to the number of candidate frequency domain resources.

In some embodiments, the adjustment unit may be further configured not to adjust the value of the counter of the first device in a case that the third information sent by the second device is received if the value of the counter of the first device is less than the first numerical value.

In some embodiments, the apparatus 1700 for resource determination may further include a receiving unit. The receiving unit may be configured to receive the second information. The second information is transmitted by the second device after receiving the first identification information, and the second information includes at least: the first information field; and/or the second information field.

The first information field is used to indicate that the second information is ACK information, and the second information field includes the first identification information.

In some embodiments, the first information field includes at least any one of: an ACK character; the first bit sequence; or code information.

In some embodiments, the second information field includes K sub-information field(s), the K sub-information field(s) carries one or more pieces of first identification information, the one or more pieces of first identification information is all of the first identification information, received by the second device, sent by at least one first device, and K is an integer greater than or equal to 1.

In some embodiments, a value of K is determined according to a number of the one or more pieces of first identification information, or according to the number of candidate frequency domain resources.

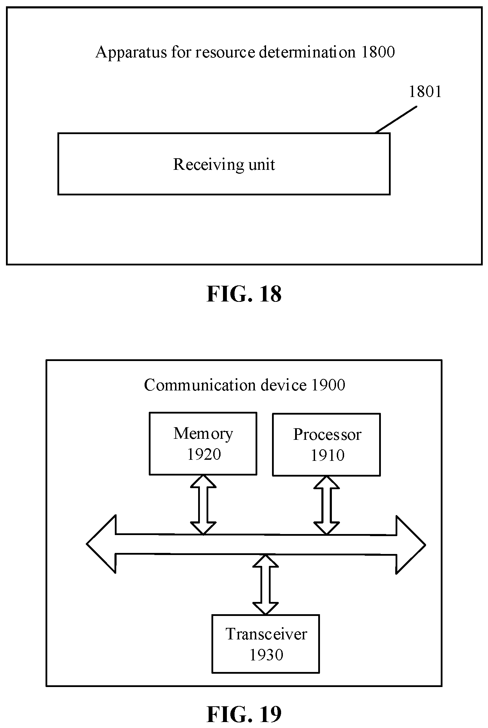

FIG. 18 is a schematic diagram of a structure composition of an apparatus 1800 for resource determination provided by an embodiment of the present disclosure. The apparatus is applied to the second device. As illustrated in FIG. 18, the apparatus 1800 for resource determination includes a receiving unit 1801.

The receiving unit 1801 is configured to receive the first identification information. The first identification information is transmitted by the first device(s) based on the first frequency domain resource(s).

In some embodiments, the apparatus 1800 for resource determination may further include a transmission unit. The transmission unit may be configured to broadcast/multicast the first information. The first information is used to trigger the first device(s) to send the first identification information to the second device.

In some embodiments, the receiving unit 1801 may be further configured to receive the second identification information. The second identification information is transmitted by the first device(s) based on the second frequency domain resource(s).

In some embodiments, the transmission unit may be further configured to broadcast/multicast the second information. The second information is used to trigger the first device(s) to transmit the second identification information to the second device. The second information includes at least: the first information field, and/or the second information field.

The first information field is used to indicate that the second information is ACK information, and the second information field is used to indicate whether the first identification information of the first device(s) is successfully sent.

Those skilled in the art should understand that the related description of the above-described apparatuses for resource determination according to the embodiments of the present disclosure may be understood with reference to the related description of the methods for resource determination according to the embodiments of the present disclosure.

FIG. 19 is a schematic structural diagram of a communication device provided by an embodiment of the present disclosure. The communication device may be the first device or the second device. The communication device 1900 illustrated in FIG. 19 includes a processor 1910. The processor may be configured to invoke and execute a computer program from a memory to implement the methods in the embodiments of the present disclosure.

Alternatively, as illustrated in FIG. 19, the communication device 1900 may further include a memory 1920. Here, the processor 1910 may invoke and execute a computer program from the memory 1920 to implement the methods in the embodiments of the present disclosure.

The memory 1920 may be a separate device independent of the processor 1910, or may be integrated in the processor 1910.

Alternatively, as illustrated in FIG. 19, the communication device 1900 may further include a transceiver 1930, and the processor 1910 may control the transceiver 1930 to communicate with other devices, specifically, may send information or data to or receive information or data sent by other devices.

Here, the transceiver 1930 may include a transmitter and a receiver. The transceiver 1930 may further include one or more antennas.

Alternatively, the communication device 1900 may specifically be a second device according to the embodiments of the present disclosure, and the communication device 1900 may implement corresponding processes implemented by the second device in each method according to the embodiments of the present disclosure, which will not be described again here for simplicity.

Alternatively, the communication device 1900 may be specifically the first device of the embodiments of the present disclosure, and the communication device 1900 may implement corresponding processes implemented by the first device in each method of the embodiments of the present disclosure, which will not be described again here for simplicity.

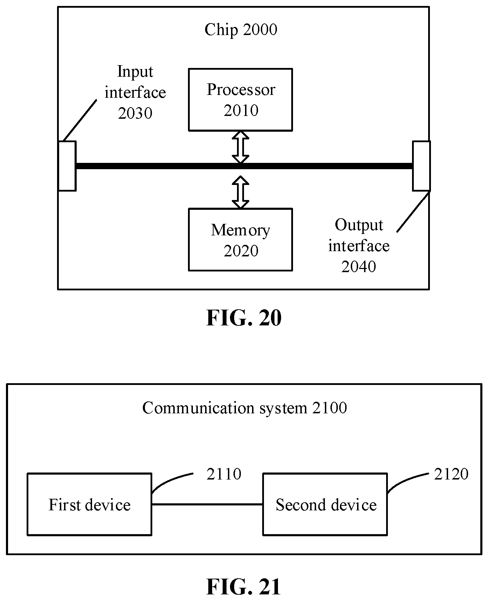

FIG. 20 is a schematic structural diagram of a chip according to an embodiment of the present disclosure. The chip 2000 illustrated in FIG. 20 includes a processor 2010. The processor 2010 may invoke and execute a computer program from a memory to implement the method in the embodiment of the present disclosure.

Alternatively, as illustrated in FIG. 20, the chip 2000 may further include a memory 2020. Here, the processor 2010 may invoke and execute a computer program from the memory 2020 to implement the method in the embodiment of the present disclosure.

The memory 2020 may be a separate device independent of the processor 2010, or may be integrated in the processor 2010.

Alternatively, the chip 2000 may further include an input interface 2030. Here, the processor 2010 may control the input interface 2030 to communicate with other devices or chips, and specifically, may acquire information or data transmitted by other devices or chips.

Alternatively, the chip 2000 may further include an output interface 2040. Here, the processor 2010 may control the output interface 2040 to communicate with other devices or chips, and specifically, may output information or data to other devices or chips.

Alternatively, the chip may be applied to the second device in the embodiments of the present disclosure, and the chip may implement the corresponding processes implemented by the second device in each method of the embodiment of the present disclosure, which will not be described again here for simplicity.

Alternatively, the chip may be applied to the first device in the embodiments of the present disclosure, and the chip may implement the corresponding processes implemented by the first device in each method of the embodiment of the present disclosure, which will not be described again here for simplicity.

It should be understood that the chip mentioned in the embodiment of the present disclosure may also be referred to as a system-level chip, a system chip, a chip system, a system-on-chip chip, or the like.

Embodiments of the present disclosure further provide a computer storage medium storing one or more programs, and the one or more programs may be executed by one or more processors to implement the methods in the embodiments of the present disclosure.

FIG. 21 is a schematic block diagram of a communication system provided by an embodiment of the present disclosure. As illustrated in FIG. 21, the communication system 2100 includes the first device 2110 and the second device 2120.

The first device 2110 may be used to implement the corresponding functions implemented by the first device in the above-described method, and the second device 2120 may be used to implement the corresponding functions implemented by the second device in the above-described method, which will not be described in detail here for simplicity.

It should be understood that the processor of the embodiments of the present disclosure may be an integrated circuit chip having signal processing capability. In the implementation process, the operations of the above-described method embodiments may be completed by hardware integrated logic circuitry in the processor or instructions in the form of software. The Processor may be a general-purpose processor, a Digital Signal Processor (DSP), an Application Specific Integrated Circuit (ASIC), a Field Programmable Gate Array (FPGA) or other Programmable logic device, a discrete gate or transistor logic device, or a discrete hardware component. The methods, steps, and logical block diagrams disclosed in the embodiments of the present disclosure may be implemented or executed. The general-purpose processor may be a microprocessor or the processor may be any conventional processor or the like. The operations of the method disclosed in connection with the embodiments of the present disclosure may be directly embodied as being executed by a hardware decoding processor, or may be executed by a combination of hardware and software modules in the decoding processor. The software module may be located in a storage medium mature in the art, such as random access memory, flash memory, read-only memory, programmable read-only memory, or electrically erasable programmable memory, registers, etc. The storage medium is located in the memory, and the processor reads the information in the memory, and completes the steps of the method in combination with its hardware.

It can be understood that the memory in the embodiments of the present disclosure may be a volatile memory or a non-volatile memory, or may include both volatile and non-volatile memories. The non-volatile Memory may be a Read-Only Memory (ROM), a Programmable Read-Only Memory (PROM), an Erasable Programmable Read-Only Memory (EPROM), an Electrically Erasable Programmable Read-Only Memory (EPROM), or a flash Memory. The volatile Memory may be a Random Access Memory (RAM), which serves as an external cache. By way of illustration, but not limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory of the systems and methods described herein is intended to include, but is not limited to, these and any other suitable types of memory.

It should be understood that the above-described memory is exemplary but not limiting, and for example, the memory in the embodiment of the present disclosure may also be a SRAM, a DRAM, a SDRAM, a DDR SDRAM, an ESDRAM, a SLDRAM, a DR RAM, and the like. That is, the memory in embodiments of the present disclosure is intended to include, but is not limited to, these and any other suitable types of memory.

Embodiments of the present disclosure further provide a computer-readable storage medium for storing a computer program.

Alternatively, the computer-readable storage medium may be applied to the second device in the embodiments of the present disclosure, and the computer program causes the computer to execute the corresponding processes implemented by the second device in each method of the embodiment of the present disclosure, which will not be described again here for simplicity.

Alternatively, the computer-readable storage medium may be applied to the first device in the embodiment of the present disclosure, and the computer program causes the computer to execute the corresponding processes implemented by the first device in each method of the embodiment of the present disclosure, which will not be described again here for simplicity.

Embodiments of the present disclosure further provide a computer program product including computer program instructions.

Alternatively, the computer program product may be applied to the second device in the embodiments of the present disclosure, and the computer program instruction causes the computer to execute the corresponding processes implemented by the second device in each method of the embodiment of the present disclosure, which will not be described again here for simplicity.

Alternatively, the computer program product may be applied to the first device in the embodiments of the present disclosure, and the computer program instruction causes the computer to execute the corresponding processes implemented by the first device in each method of the embodiment of the present disclosure, which will not be described again here for simplicity.

Embodiments of the present disclosure further provide a computer program.

Alternatively, the computer program may be applied to the second device in the embodiment of the present disclosure, and when the computer program is run on the computer, the computer executes the corresponding processes implemented by the second device in each method of the embodiment of the present disclosure, which will not be described again here for simplicity.

Alternatively, the computer program may be applied to the first device in the embodiment of the present disclosure, and when the computer program is run on the computer, the computer executes the corresponding processes implemented by the first device in each method of the embodiment of the present disclosure, which will not be described again here for simplicity.

Those of ordinary skill in the art will recognize that the elements and algorithm steps of the various examples described in connection with the embodiments disclosed herein may be implemented in electronic hardware, or a combination of computer software and electronic hardware. Whether these functions are performed in hardware or software depends on the specific application and design constraints of the technical solution. The skilled artisan may implement the described functionality using different methods for each particular application, but such implementation should not be considered beyond the scope of the present disclosure.

Those skilled in the art can clearly understand that for convenience and simplicity of the description, the specific working processes of the above-described systems, apparatuses, and units may be referred to the corresponding processes in the above-described method embodiments, and will not be described again here.

In the several embodiments provided herein, it should be understood that the disclosed systems, apparatuses, and methods may be implemented in other ways. For example, the apparatus embodiments described above are merely illustrative. For example, the division of the units is merely a logical function division, and there may be other division methods in actual implementation. For example, multiple units or components may be combined or integrated into another system, or some features may be ignored or not implemented. Alternatively, the coupling or direct coupling or communication connection with each other shown or discussed may be through some interface, indirect coupling or communication connection of apparatus or units, may be in electrical, mechanical or other form.

The units described as separate components may or may not be physically separated, and the components shown as units may or may not be physical units, that is, may be located in one place, or may be distributed over a plurality of network units. Some or all of the units may be selected according to actual needs to achieve the purpose of the solution of the present embodiment.

In addition, each functional unit in each embodiment of the present disclosure may be integrated in one processing unit, each unit may physically exist alone, or two or more units may be integrated in one unit.

The functions, if implemented in the form of software functional units and sold or used as stand-alone products, may be stored in a computer readable storage medium. Based on such an understanding, the technical solution of the present disclosure may be embodied in the form of a software product in essence or a part that contributes to the prior art or a part of the technical solution, which is stored in a storage medium and includes several instructions for causing a computer device (which may be a personal computer, a server, or a network device, etc.) to perform all or part of the steps of the methods described in various embodiments of the present disclosure. The storage medium includes various media capable of storing program code, such as a USB flash drive, a mobile hard disk, a Read-Only Memory (ROM), a Random Access Memory (RAM), a magnetic disk or an optical disk.

The above are only specific embodiments of the present disclosure, but the protection scope of the present disclosure is not limited thereto, and any person familiar with the technical field can easily think of changes or substitutions within the technical scope disclosed in the present disclosure, which should be covered by the protection scope of the present disclosure. Therefore, the scope of protection of the present disclosure should be determined by the scope of protection of the claims.

## Claims

1. A method for resource determination, comprising:
determining, by a first device, a first frequency domain resource, wherein the first frequency domain resource is used to transmit first identification information of the first device to a second device.

2. The method of claim 1, wherein the first frequency domain resource is determined based on one or more of:
identification information associated with the first device;
device type information of the first device;
identification information associated with the second device;
available frequency domain resource information;
a number of bits of the first identification information;
a transmission block size (TBS) of the first identification information;
a coding rate (CR) of the first identification information;
a transmission rate of the first identification information; or
a first parameter.

3. The method of claim 2, wherein the available frequency domain resource information comprises a first frequency domain resource range of a first network in which the first device and the second device are located, and/or a second frequency domain resource range associated with the device type information of the first device.

4. The method of claim 3, wherein
the first frequency domain resource range is located in a first frequency band or a first carrier; or
the first frequency domain resource range is located in a guard band of the first frequency band; or
the first frequency domain resource range is located in a second frequency band or a second carrier;
wherein the first frequency band is a frequency band used by a New Radio (NR) system or a Long Term Evolution (LTE) system, the first carrier is a carrier used by the NR system or the LTE system, the second frequency band is a different frequency band from the first frequency band, and the second carrier is a different carrier from the first carrier.

5. The method of any one of claims 2 to 4, wherein the first parameter is determined based on first information sent by the second device, and the first information is used to trigger or instruct the first device to transmit the first identification information of the first device.

6. The method of any one of claims 1 to 5, further comprising:
if second information sent by the second device is received, transmitting, by the first device, second identification information of the first device on second frequency domain resource,
wherein the second information is associated with the first identification information, and the second frequency domain resource is associated with the first frequency domain resource.

7. The method of claim 6, wherein the first frequency domain resource is the same as the second frequency domain resource, or the second frequency domain resource is determined according to the first frequency domain resource and a frequency domain offset value.

8. The method of claim 7, wherein the frequency domain offset value is determined based on one or more of:
information predefined in a protocol;
preconfigured information;
information configured by a network;
determination of indication information of the second device; or
autonomously determination of the first device.

9. The method of any one of claims 1 to 8, wherein the first frequency domain resource is related to a reference position, and the reference position is determined based on one or more of:
a center frequency point position or a frequency domain starting position corresponding to a frequency band or carrier used by a first network in which the second device is located;
a frequency domain starting position, a frequency domain center position or a frequency domain end position of frequency domain resource(s) used by the first network in which the second device is located;
a frequency domain starting position, a frequency domain center position or a frequency domain end position corresponding to a channel or preamble sent by the second device;
a frequency domain position of a carrier for the first device to perform backscattering;
information predefined in a protocol;
preconfigured information; or
information configured by a network.

10. The method of any one of claims 2 to 9, further comprising:
determining, by a first device, a value of a counter of the first device based on the first parameter.

11. The method of any one of claims 1 to 9, wherein determining, by the first device, the first frequency domain resource based on a first parameter comprises:
in a case that each time third information sent by the second device is received, adjusting, by the first device, a value of a counter of the first device until the value of the counter satisfies a preset condition, and determining the first frequency domain resource according to a current value of the counter, or randomly selecting the first frequency domain resource,
wherein the third information is used for the first device to adjust the value of the counter.

12. The method of claim 11, wherein an adjustment step size for adjusting the value of the counter by the first device is related to a number of candidate frequency domain resources.

13. The method of any one of claims 1 to 12, further comprising:
in a case that a value of a counter of the first device satisfies a preset condition, transmitting, by the first device, the first identification information of the first device to the second device based on the first frequency domain resource.

14. The method of any one of claims 11 to 13, wherein the preset condition comprises at least any of:
the value of the counter of the first device being equal to zero; or
the value of the counter of the first device being less than a first numerical value, wherein the first numerical value is determined according to a number of candidate frequency domain resources.

15. The method of claim 14, further comprising:
if the value of the counter of the first device is less than the first numerical value, in a case that the third information sent by the second device is received, not adjusting, by the first device, the value of the counter of the first device.

16. The method of any one of claims 1 to 15, further comprising:
receiving, by the first device, second information, wherein the second information is transmitted by the second device after receiving the first identification information, and the second information comprises at least:
a first information field; and/or
a second information field;
wherein the first information field is used to indicate that the second information is acknowledge (ACK) information, and the second information field comprises the first identification information.

17. The method of claim 16, wherein the first information field comprises at least any one of:
an ACK character;
a first bit sequence; or
code information.

18. The method of claim 16 or 17, wherein the second information field comprises K sub-information field(s), the K sub-information field(s) carries one or more pieces of first identification information, the one or more pieces of first identification information is all of the first identification information, received by the second device, sent by at least one first device, and K is an integer greater than or equal to 1.

19. The method of claim 18, wherein a value of K is determined according to a number of the one or more pieces of first identification information, or according to a number of candidate frequency domain resources.

20. A method for resource determination, comprising:
receiving, by a second device, first identification information, wherein the first identification information is transmitted by first device(s) based on first frequency domain resource(s).

21. The method of claim 20, further comprising:
broadcasting or multicasting, by the second device, first information, wherein the first information is used to trigger the first device(s) to transmit the first identification information to the second device.

22. The method of claim 20 or 21, further comprising:
receiving, by the second device, second identification information, wherein the second identification information is transmitted by the first device(s) based on second frequency domain resource(s).

23. The method of any one of claims 20 to 22, further comprising:
broadcasting or multicasting, by the second device, second information, wherein the second information is used to trigger the first device(s) to transmit second identification information to the second device, wherein the second information comprises at least:
a first information field; and
a second information field;
wherein the first information field is used to indicate that the second information is acknowledge (ACK) information, and the second information field is used to indicate whether the first identification information of the first device(s) is successfully sent.

24. An apparatus for resource determination, applied to a first device, and comprising:
a determination unit, configured to determine a first frequency domain resource, wherein the first frequency domain resource is used to transmit first identification information of the first device to a second device.

25. An apparatus for resource determination, applied to a second device, and comprising:
a receiving unit, configured to receive first identification information, wherein the first identification information is transmitted by first device(s) based on first frequency domain resource(s).

26. A first device, comprising:
a memory, configured to store computer-executable instructions; and
a processor connected to the memory, and configured to, by executing the computer-executable instructions, implement the method of any one of claims 1 to 19.

27. A second device, comprising:
a memory, configured to store computer-executable instructions; and
a processor, connected to the memory, and configured to, by executing the computer-executable instructions, implement the method of any one of claims 20 to 23.

28. A chip comprising:
a processor configured to invoke and execute a computer program from a memory to cause the device mounted with the chip to perform the method of any one of claims 1 to 19, or perform the method of any one of claims 20 to 23.

29. A computer-readable storage medium storing a computer program that, when executed by at least one processor, implements the method of any one of claims 1 to 19, or implements the method of any one of claims 20 to 23.

30. A computer program product comprising a computer storage medium, wherein the computer storage medium stores a computer program, the computer program comprises instructions executable by at least one processor that, when executed by the at least one processor, implement the method of any one of claims 1 to 19, or implement the method of any one of claims 20 to 23.

31. A computer program causing a computer to perform the method of any one of claims 1 to 19, or to implement the method of any one of claims 20 to 23.
